# EUROPÄISCHE PATENTSCHRIFT

(11) **EP 2 078 887 B1**
(45) Veröffentlichungstag und Bekanntmachung des Hinweises auf die Patenterteilung: **23.02.2011**
(21) Anmeldenummer: 08171239.0
(22) Anmeldetag: 10.12.2008
(51) Int. Cl.: F16J 9/16

(54) **Gasdichte Kolbenringanordnung**
Gas-proof piston ring assembly
Agencement de bague de piston étanche au gaz

(30) Priorität: 14.01.2008 AT 552008
(43) Veröffentlichungstag der Anmeldung: 15.07.2009
(73) Patentinhaber: Hoerbiger Kompressortechnik Holding GmbH, 1220 Wien (AT)
(72) Erfinder: Lindner-Silwester, Tino, 1150 Wien (AT); Hold, Christian, 1170 Wien (AT); Molnar, Martin, 1110 Wien (AT)
(74) Vertreter: Weiss, Christian

(56) Entgegenhaltungen:
- EP-A- 1 146 264
- FR-A- 485 877
- GB-A- 895 787
- GB-A- 2 060 092
- US-A- 1 749 832

## Beschreibung

Die gegenständliche Erfindung betrifft eine gasdichte Kolbenringanordnung mit einem Kolbenring aus einer Mehrzahl von Kolbenringsegmenten, deren Enden in Umfangsrichtung axial abgestuft ausgeführt sind und die abgestuften Enden benachbarter Kolbenringsegmente zur Ausbildung einer axialen Abdichtung axial aneinander liegend angeordnet sind.

Bei Kolbenkompressoren wird das Arbeitsmedium durch einen Kolben verdichtet. Die Dichtelemente, welche den zwischen Kolben und Zylinder gebildeten Ringspalt abdichten, werden Kolbenringe genannt. Bei Kolbenkompressoren in doppeltwirkender Bauweise schwankt der Gasdruck in der deckelseitigen und kurbelseitigen Kompressionskammer jeweils zwischen Saug- und Lieferdruck, wobei die beiden Arbeitskammerdruckverläufe um 180° Kurbelwinkel gegeneinander phasenverschoben sind. Dementsprechend muss das Kolbendichtsystem in solchen Anwendungen in beide Richtungen abdichten, also doppeltwirkend ausgeführt sein. Bei Hochdruckanwendungen hingegen erfolgt die Kompression oftmals ausschließlich deckelseitig, sodass die Kolbenringe bei solchen Anwendungen stets in eine Richtung dichten und dabei den variierenden Kompressionskammerdruck auf einen üblicherweise kleineren, zeitlich unveränderlichen Druck, beispielsweise den Saugdruck der betrachteten Stufe, reduzieren. Für solche Anwendungen sollten einfachwirkende Kolbenringe verwendet werden, womit garantiert wird, dass während der Re-Expansionsphase kein unnötig hoher Druck im Radialspaltvolumen zwischen zwei Kolbenringen eingeschlossen wird, was eine unnötige Erhöhung des Kolbenringverschleißes nach sich ziehen würde.

Unabhängig vom Komplexitätsgrad der Ausführung eint alle Kolbenringe das Merkmal, dass sie durch die abzudichtende Druckdifferenz aktiviert, d.h. mit einer bestimmten Flächenpressung gegen die Nutflanke und die Laufbüchse des Zylinders gedrückt werden und dadurch ihre Dichtwirkung entfalten. Insbesondere bei trockenlaufenden Anwendungen kann dabei die Ringverschleißrate durch zu hohe Flächenpressungen unakzeptable Ausmaße annehmen. Die Verschleißrate von PTFE-basierenden Materialien, welche typischerweise bei Kolbenringen zur Anwendung kommen, wächst mit zunehmender Temperatur der Gegenlauffläche (in diesem Fall der Laufbüchse) im Allgemeinen beträchtlich an. Deshalb spielt die im Dichtspalt Kolbenring/Laufbüchse erzeugte Reibungswärme durch Aufheizen der Laufbüchse eine beträchtliche Rolle. Speziell wenn die Ringe erhöhten Temperaturen ausgesetzt sind, kann Extrusion der Kolbenringe in den zwischen Kolben und Zylinder gebildeten Ringspalt, welcher zur Vermeidung des Anreibens des Kolbens an der Laufbüchse über ein gewisses Mindestradialmaß verfügen muss, die Dichtwirkung der Kolbenringe zusätzlich empfindlich herabsetzen oder die Kolbenringe sogar zerstören. Bei trockenlaufenden Anwendungen bedient man sich deshalb, vor allem bei Hochdruckanwendungen, des Konzeptes des Druckausgleichs, wo der Druckabbau im Dichtspalt Kolbenring/Laufbüchse durch Nuten, Schlitze, Bohrungen im Kolbenring oder dergleichen derart beeinflusst wird, dass sich der mittlere, die Flächenpressung reduzierende Gasdruck in diesem Dichtspalt erhöht.

Die Art und Weise, wie sich die gesamte abzudichtende Druckdifferenz bei mehreren nebeneinander angeordneten Kolbenringen auf die einzelnen Kolbenringe verteilt, hängt von den individuellen Zusammenhängen zwischen anstehender Druckdifferenz und Leckage der einzelnen Kolbenringe ab. Den weitaus größten Beitrag zur Leckage durch einen Kolbenring liefert dabei üblicherweise die Gasströmung durch den Stoß des Kolbenringes. Da sich dieser Stoß mit zunehmendem Verschleiß vergrößert, nimmt auch die Dichtwirkung der Ringe mit der Zeit empfindlich ab. Die einfachste mögliche Ausführung eines solchen Kolbenringes stellt dabei die einteilige, gerade geschnittene Form dar. Einteilige, einfach geschnittene Kolbenringe können nur in gebauten Kolben eingebaut werden bzw. lassen sich in einteiligen Kolben nur durch zusätzlichen Aufwand (z.B. durch Zusatzwerkzeug oder unter vorheriger Erwärmung) einbauen, sofern die Kolbenringe ausreichend flexibel sind. Vor allem bei Kolbenringen mit kleinen Durchmessern und damit hoher Biegesteifigkeit, wie sie insbesondere in Hochdruckanwendungen zum Einsatz kommen, können daher nur gebaute Kolben verwendet werden, was aber in der Fertigung und Wartung aufwendiger ist.

Der Tendenz der zunehmenden Leckage kann entgegengewirkt werden, indem so genannte gasdichte Kolbenringausführungen verwendet werden, bei denen der Stoß (bei einem einfach geschnittenen Ring) oder die Stöße (bei einem mehrfach geschnittenen segmentierten Ring) abgedeckt wird/werden. Dabei werden ein jeweils geschnittener L-förmiger und rechteckiger Ring kombiniert, wobei die Stöße der beiden Ringe versetzt zueinander angeordnet werden. Derartige Kolberingausführungen sind z.B. aus der FR 485 877 A, der DE 28 29 352 A1 oder der US 3 632 121 A bekannt. Insbesondere bei Hochdruckanwendungen, wo solche Ringausführungen aufgrund größerer Anforderungen an die Dichtheit vermehrt zum Einsatz kommen, kommt es jedoch oftmals dazu, dass ein Ring aufgrund der thermischen und mechanischen Belastung in den Stoß des anderen Ringes gedrückt wird, was zu Verformungen und einer Verschlechterung der Dichtwirkung führen kann. Außerdem kann es zu Brüchen zufolge der Materialschwächung durch vollkommen (d.h. in radialer und axialer Richtung) abgedeckte Stöße kommen.

Ebenso wurden bereits gasdichte Kolbenringausführungen mit segmentierten Kolbenringen bekannt, bei denen eine Anzahl von Ringsegmenten zu einem Kolbenring zusammengesetzt wird. Der grundlegende Vorteil solcher segmentierter Kolbenringe liegt im Umstand, dass solche Ringe durch die Mehrteiligkeit auch in einteiligen nicht gebauten Kolben einfach eingesetzt werden können. Ein solcher Kolbenring ist z.B. in der US 2 055 153 A beschrieben. Die Abdichtung in radialer und axialer Richtung erfolgt dabei durch die Formgebung der Ringsegmente. Aufgrund der notwendigen Abdichtung in radialer und axialer Richtung ergibt sich jedoch eine komplexe Form der Ringsegmente, die kompliziert und schwierig herzustellen ist. Ein solcher Kolbenring ist daher aufwendig in der Fertigung.

In einer anderen Ausführung einer gasdichten Kolbenringanordnung nach der JP 2001-032935 A2 wird ein einfach geschnittener Kolbenring mit einem abgestuften Stoß zur axialen Abdichtung mit einem an der radial inneren Umfangsfläche des Kolbenringes anliegenden einfach geschnittenen Dichtring kombiniert, der in radialer Richtung abdichtet. Am Kolbenring ist weiters ein Vorsprung vorgesehen, der in den Stoß des Dichtringes eingreift und somit ein Verdrehen und ein mögliches Fluchten der Stöße von Kolbenring und Dichtring verhindert. Der Dichtring muss bei zunehmendem Verschleiß aber nachstellen können, d.h. er muss in der Lage sein sich aufzuweiten, um die Abdichtung in radialer Richtung aufrecht zu erhalten. Außerdem muss der Dichtring für eine ausreichende Dichtwirkung mit einer bestimmten minimalen Anpresskraft gegen den Kolbenring gepresst werden. Diese Anforderungen machen einen ausreichend biegeweichen Dichtring erforderlich. Der Dichtring müsste daher mit kleinem Querschnitt ausgeführt sein. Das führt aber dazu, dass sich der Dichtring, vor allem bei Hochdruckanwendungen, in die Stoßspalten des Kolbenringes hineinverformen kann, was die Dichtwirkung wiederum verschlechtern würde. Aus diesem Gesichtspunkt heraus müsste der Dichtring wiederum einen ausreichend großen Querschnitt besitzen, um solchen Verformungen entgegenzuwirken. Es müssen somit zwei sich widersprechende Anforderungen erfüllt werden. In der JP 2001-032935 A2 wird dies dadurch erreicht, dass zusätzlich zum Dichtring radial innen ein Expanderring angeordnet ist, der den Dichtring zusätzlich zum wirkenden Druck durch eine Federkraft mechanisch gegen den Kolbenring presst.

Die GB 895 787 A wiederum zeigt eine Kolbenringanordnung aus einer Mehrzahl von Kolbenringsegmenten, die in axialer Richtung abdichten. Um die entstehenden radialen Spalte abzudichten, werden Dichtlamellen vorgeschlagen, die die radialen Spalte abdecken sollen und die so geformt sind, dass eine gewisse Federwirkung entsteht, um die Dichtlamellen gegen die Kolbenringsegmente zu drücken. Die Dichtlamellen müssen aber noch zusätzlich durch ein Federelement angedrückt werden, um eine ausreichende Dichtwirkung zu erzielen. Zusätzlich sind noch Federn vorgesehen, die die Dichtlamellen gegen den Grund der Kolbennut pressen, um die Federwirkung der Dichtlamellen sicherzustellen. Eine solche Anordnung besteht aus vielen Einzelteilen und ist daher entsprechend aufwendig in der Montage und auch fehleranfällig im Betrieb.

Es ist daher eine Aufgabe der gegenständlichen Erfindung, die oben angeführten Nachteile bekannter gasdichter Kolbenringanordnungen zumindest zu reduzieren.

Diese Aufgabe wird erfindungsgemäß dadurch gelöst, indem an zumindest einem Kolbenringsegment an der radial inneren Umfangsfläche über einen Teil der Breite des Kolbenringsegmentes eine radiale Abstufung vorgesehen ist und ein einfach geschnittener Dichtring vorgesehen ist, der radial innen an der Umfangsfläche der Kolbenringsegmente anliegt und am Dichtring eine axiale Ausnehmung vorgesehen ist, die mit der radialen Abstufung des Kolbenringsegments zusammenwirkt. Durch diese axiale Ausnehmung des Dichtringes bleibt der Dichtring ausreichend biegeweich, auch wenn der Dichtring eine größeren Querschnitt aufweist, um einer Extrusion des Dichtringes in den Stoß zwischen den Kolbenringsegmenten vorzubeugen. Diese Formgebung des Dichtringes in Umfangsrichtung stellt somit sicher, dass bei hinreichender radialer Dicke zur Erzielung ausreichender Resistenz gegen Extrusion in die radialen Spalte zwischen den Kolbenringssegmenten, die Biegesteifigkeit des Dichtringes trotzdem so gering bleibt, dass der Dichtring bei Verschleiß der Kolbenringsegmente nachstellen kann und der Dichtring immer mit ausreichendem Druck gegen die innere Umfangsfläche der Kolbenringsegmente gedrückt wird. Der Dichtring wird dabei lediglich durch den anliegenden Druck gegen die Kolbenringsegmente gepresst und muss selbst keine aufweitende Federkraft aufbringen. Ebenso wenig ist mit einer erfindungsgemäßen Kolbenringanordnung ein zusätzlicher Expanderring erforderlich.

Wenn an jedem Kolbenringsegment eine radiale Abstufung vorgesehen ist und am Dichtring eine entsprechende Anzahl zugehöriger axialer Ausnehmungen vorgesehen sind, können identische Kolbenringsegmente verwendet werden, was die Herstellung und den Zusammenbau der Kolbenringanordnung wesentlich vereinfacht.

In einer vorteilhaften Ausgestaltung erhebt sich die radiale Abstufung aus der inneren Umfangsfläche und greift in die Ausnehmung am Dichtring ein. Durch die Ausbildung einer radialen Erhebung werden die Kolbenringsegmente im Bereich der Abstufung nicht geschwächt. Alternativ kann die radiale Abstufung auch als radiale Ausnehmung in der Umfangsfläche ausgeführt sein, wobei dann am Dichtring an einem Ende der axialen Ausnehmung ein radialer Vorsprung vorgesehen ist, der in die radiale Ausnehmung eingreift.

Indem in einem Kolbenringsegment eine Mehrzahl von Ausnehmungen vorgesehen werden, die eine Stirnseite des Kolbenringsegments mit der äußeren Umfangsfläche des Kolbenringsegments verbinden, kann ein Druckausgleich verwirklicht werden, der die Flächenpressung zwischen Kolbenring und feststehenden Bauteil reduziert. Bei sorgsamer Auslegung der Anzahl der Ausnehmungen in einem Kolbenringsegment hat sich gezeigt, dass der Grad des Druckausgleichs praktisch nicht gegenüber dem mit einer Umfangsnut zu erzielenden herabgesetzt wird. Durch die Anordnung von Ausnehmungen anstatt einer Umfangsnut wird aber die Festigkeit/Extrusionssteifigkeit des Kolbenringsegments nicht herabgesetzt.

Um die einfachwirkende Dichtfunktion der Kolbenringanordnung sicherzustellen, ist in der Stirnseite des Kolbenringsegments eine radiale Nut vorgesehen, wobei die Nut im Bereich des Stoßes des Dichtringes angeordnet ist.

Besonders vorteilhaft wird ein Stützring vorgesehen, der an einer Stirnseite der Kolbenringsegmente anliegt. Mit einem solchen Stützring kann verhindert werden, dass der Kolbenring durch die thermische Belastung und den wirkenden Druck in den Spalt zwischen feststehenden und beweglichen Bauteil hineinextrudiert und damit beschädigt oder gar zerstört wird, womit auch die Dichtfunktion der Kolbenringanordnung vermindert werden würde. Der Stützring kann dabei als ein durchgehender Ring oder als ein ein- oder mehrfach geschnittener Ring ausgeführt sein, wobei bei einem geschnittenen Stützring die Stützringsegmente durch ein Schloss in Umfangsrichtung zusammengehalten werden. Bevorzugt werden die Stützringsegmente durch das Schloss gleichzeitig in radialer Richtung abgedichtet, was die Dichtwirkung erhöht.

Die erfindungsgemäße Kolbenringanordnung wird vorteilhaft in einer Abdichtung zwischen einem beweglichen Bauteil und einem ortsfesten Bauteil eingesetzt, wobei die Kolbenringanordnung im beweglichen Bauteil in einer Ausnehmung und radial beabstandet vom Grund der Ausnehmung angeordnet ist. Besonders bevorzugt findet die erfindungsgemäße Kolbenringanordnung in einem Kompressor Anwendung, wobei die Kolbenringanordnung in einem Kolben des Kompressors angeordnet wird.

Für den Druckausgleich mündet die Ausnehmung im Kolbenringsegment an der dem hohen Druck zugewandten Stirnseite, damit der hohe Druck die Flächenpressung reduziert.

Der Stützring wird bevorzugt an der dem niedrigen Druck zugewandten Stirnseite anliegend angeordnet, da der Kolbenring durch den hohen Druck gegen die Niederdruckseite gepresst wird und damit das Extrusionsproblem auf der Niederdruckseite auftritt.

Die gegenständliche Erfindung wird nachfolgend anhand der schematischen, beispielhaften, nicht einschränkenden und vorteilhafte Ausgestaltungen zeigenden Figuren 1 bis 8 beschrieben. Dabei zeigt
Fig. 1 eine Darstellung einer erfindungsgemäßen gasdichten Kolbenringanordnung mit Druckausgleich in verschiedenen Ansichten,
Fig. 2 eine Darstellung eines Kolbenringsegments einer erfindungsgemäßen gasdichten Kolbenringanordnung in verschiedenen Ansichten,
Fig. 3 eine Darstellung eines Dichtringes einer erfindungsgemäßen gasdichten Kolbenringanordnung in verschiedenen Ansichten,
Fig. 4 eine Darstellung einer alternativen gasdichten Kolbenringanordnung ohne Druckausgleich in verschiedenen Ansichten,
Fig. 5 eine Anordnung einer erfindungsgemäßen Kolbenringanordnung in einem Kolben,
Fig. 6 eine Anordnung einer erfindungsgemäßen Kolbenringanordnung in einem Kolben mit Stützring und
Fig. 7 und 8 verschiedene Ausgestaltungen eines Stützringes.

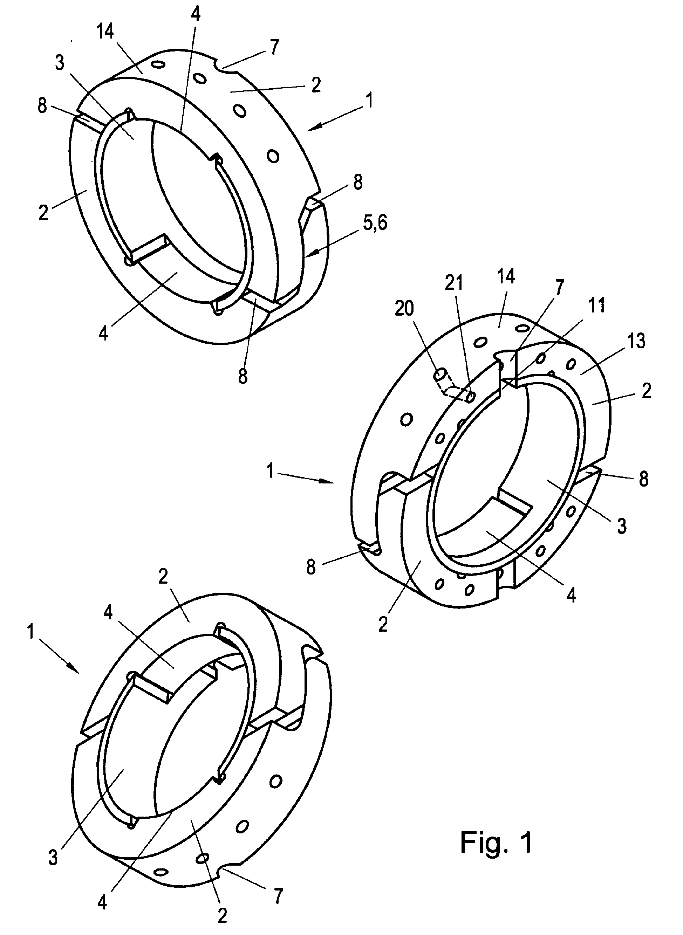

Eine bevorzugte Ausgestaltung einer erfindungsgemäßen gasdichten Kolbenringanordnung 1 wird nachfolgend unter Bezugnahme auf die Figuren 1 bis 3 beschrieben. In der gezeigten Ausführung besteht der Kolbenring aus zwei identischen Kolbenringsegmenten 2. An den in Umfangsrichtung gesehenen Enden der Kolbenringsegmente 2 ist jeweils in bekannter Weise eine axiale Abstufung 5, 6 vorgesehen, die mit zugehörigen Abstufungen der benachbarten Kolbenringsegmente 2 dichtend zusammen wirken, um eine Abdichtung in axialer Richtung zu erzielen. Dabei liegen die benachbarten Kolbenringsegmente 2 axial aneinander und sind (zumindest ab einem gewissen Verschleiß) in Umfangsrichtung beabstandet voneinander angeordnet. Durch die radiale Beabstandung entstehen zwischen den Kolbenringsegmenten radiale Stöße 8, die durch den radial innen an der Umfangsfläche 9 der Kolbenringsegmente 2 anliegenden Dichtring 3 abgedichtet werden. Der Dichtring 3 ist dabei ein einfach geschnittener Ring (Stoß 11).

An den Kolbenringsegmenten 2 ist an der inneren Umfangsfläche 9 eine radiale Abstufung 4 vorgesehen, hier eine sich radial aus der inneren Umfangsfläche 9 erhebende Abstufung, die sich über einen Teil der axialen Breite des Kolbenringsegments 2 erstreckt. Im Dichtring 3 sind entsprechend der Lage und der axialen Breite der Abstufungen 4 an den Kolbenringsegmenten 2 axiale Ausnehmungen 10, 12 vorgesehen, die mit den Abstufungen 4 zusammenwirken. Durch die Abstufungen 4 ist der Dichtring 3 bezüglich der Kolbenringsegmente 2 verdrehgesichert, so dass die Stöße 8 und 11 nicht fluchtend zu liegen kommen können, was die Dichtwirkung zerstören würde. Der Dichtring 3 muss dabei in Umfangsrichtung nicht zwingend an der Abstufung 4 anliegen, sondern es kann durchaus ein gewisses Spiel in Umfangsrichtung vorhanden sein. Wichtig ist nur, dass sich der Dichtring 3 nicht soweit verdrehen kann, dass die Stöße 8 und 11 fluchten.

Der Querschnitt des Dichtringes 3 kann nun so dimensioniert werden, dass sich der Dichtring 3 durch die thermische Beanspruchung und die Druckbelastung nicht in die Stoßspalten 8 zwischen den Kolbenringsegmenten 2 hineinverformen kann. Durch die axiale Ausnehmung 10 am Dichtring 3 wird der Querschnitt des Dichtringes 3 im Bereich der Ausnehmung 10 verkleinert, was dazu führt, dass der Dichtring 3 biegeweich wird und sich bei fortlaufenden Verschleiß der Kolbenringsegmente 2 trotzdem ausreichend aufweiten und sich zur Aufrechterhaltung der Dichtwirkung an die innere Umfangsfläche 9 der Kolbenringsegmente 2 anpressen kann.

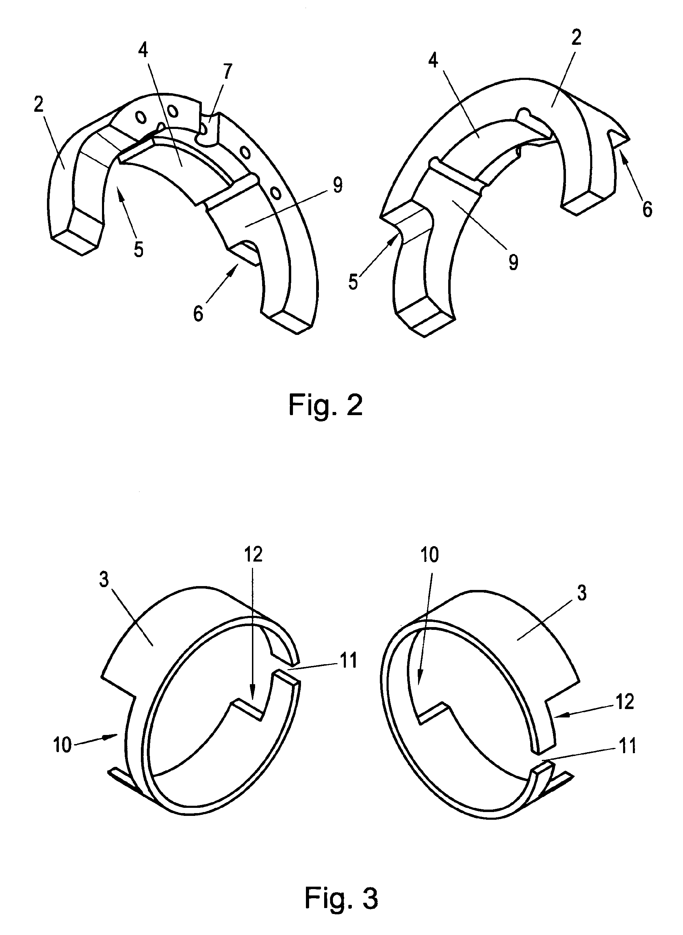

In der gezeigten bevorzugten Ausgestaltung sind zwei identische Kolbenringsegmente 2 vorgesehen, die jeweils eine Abstufung 4 aufweisen, die gegenüberliegend angeordnet sind. Die Abstufungen 4 sind dabei in der Mitte (in Umfangsrichtung) der Kolbenringsegmente 2 vorgesehen, womit die Stöße 8 und 11 um ca. 90° versetzt zueinander angeordnet sind. Die Ausnehmungen 10, 12 des Dichtringes 3 sind ebenfalls um 180° versetzt zueinander angeordnet. Der Stoß 11 des Dichtringes 3 ist dabei bevorzugt im Bereich einer der axialen Ausnehmungen 12 angeordnet. Weiters kann im Bereich des Übergangs von der radialen Abstufung 4 zur Umfangsfläche 9 in dieser aus fertigungstechnischen, mechanischen (Spannungskonzentrationsverminderung) und/oder konstruktiven Gründen eine sich axial erstreckende Hinterschneidung, wie in den Figuren 1 und 2 angedeutet, oder eine Abrundung vorgesehen sein.

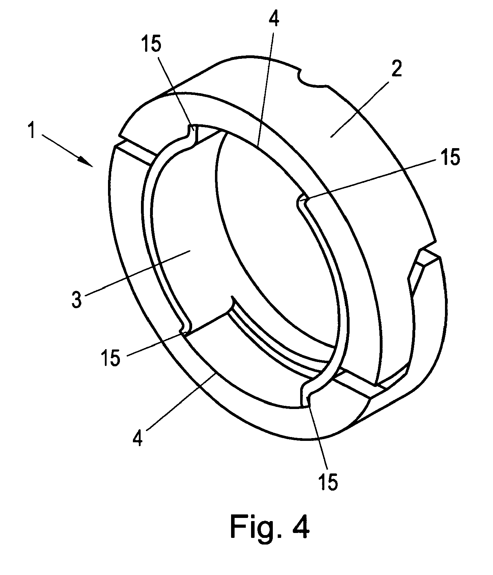

Die Abstufung 4 muss sich aber nicht radial aus der Umfangsfläche 9 erheben. Es ist auch denkbar, die Abstufung 4 als radiale Ausnehmung in der Umfangsfläche 9 auszuführen, wie in Fig. 4 dargestellt. Um eine Verdrehsicherung zu erzielen, müsste der Dichtring 3 dann entsprechende radiale Vorsprünge 15 aufweisen, die in die Abstufung 4 eingreifen. Z.B. könnte(n) dazu ein (oder beide) Ende(n) einer axialen Ausnehmung 10, 12 des Dichtringes 3 zur Ausbildung einer Schulter radial nach außen gebogen sein.

Es ist aber auch möglich nur an einem Kolbenringsegment 2 eine Abstufung 4 (als Erhebung oder Ausnehmung) vorzusehen. In diesem Fall müsste folglich auch am Dichtring 3 nur eine axiale Ausnehmung 10 vorgesehen sein. Ebenfalls können mehr als zwei Kolbenringsegmente 2 vorgesehen sein.

Die erfindungsgemäße gasdichte Kolbenringanordnung 1 kann auch mit einem Druckausgleich ausgeführt sein. Dazu führen eine Mehrzahl von axialen Ausnehmungen 21, z.B. Sackbohrungen, von einer axialen Stirnfläche 13 des Kolbenringes bzw. der Kolbenringsegmente 2 weg, die jeweils in eine radiale Ausnehmung 20, z.B. Sackbohrungen, übergehen, die in der äußeren Umfangsfläche 14 der Kolbenringsegmente 2 münden. Die axiale Ausnehmung 21 wird dabei bevorzugt entlang der neutralen Faser, d.h. im Bereich der Mitte der radialen Kolbenringhöhe, geführt, um keine Spannungskonzentrationen/-überhöhungen in Gebieten hoher Spannung zu verursachen. Auf eine in Umfangsrichtung verlaufende Nut, wie bisher üblich, wird verzichtet, um die Festigkeit/Extrusionssteifigkeit des Ringes nicht herabzusetzen. Diese Art des Druckausgleichs funktioniert nur in eine Richtung, weshalb eine radiale Nut 7 in der Stirnfläche 13 im Bereich des Stoßes 11 des Dichtringes die einfachwirkende Dichtfunktion sicherstellt.

Die Verbindung zwischen äußerer Umfangsfläche 14 und axialer Stirnfläche 13 könnte aber auch beliebig anders ausgeführt sein, z.B. als schräge durchgehende Bohrung. Entscheidend ist nur, dass der an der inneren Umfangfläche 9 anliegende Druck über die Verbindung zur radial äußeren Umfangsfläche 14 geführt wird.

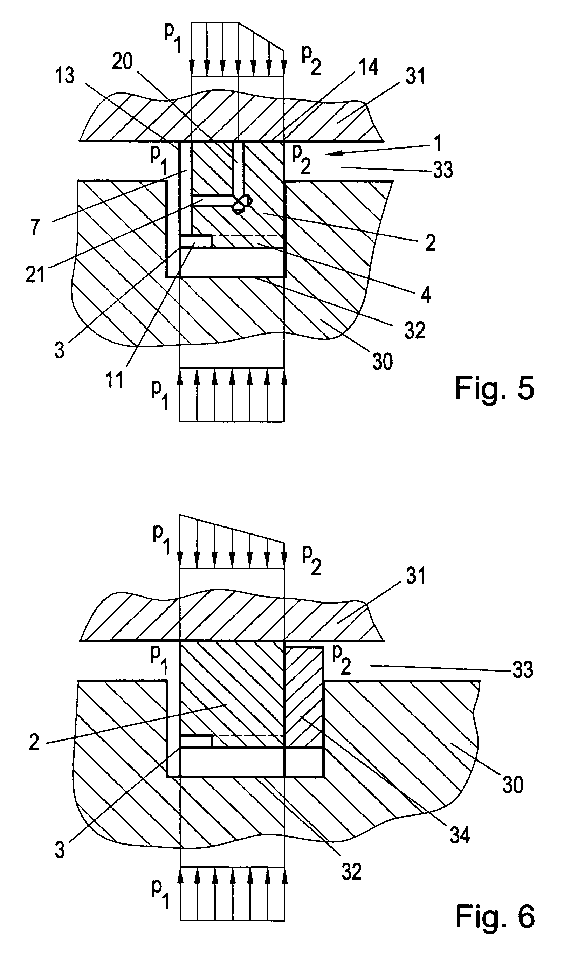

In Fig. 5 ist eine erfindungsgemäße Kolbenringanordnung 1 in einer Ausnehmung, z.B. eine Umfangsnut 32, eines Kolbens 30 eines Kompressors, eingesetzt. Eine derartige Abdichtung kann aber natürlich auch in anderen Anwendungen zur Abdichtung zwischen einem bewegliche und einem ortsfesten Bauteil eingesetzt werden, z.B. in einem Pneumatikzylinder. Der Kolbenring bzw. die Kolbenringsegmente 2 liegen mit der äußeren Umfangsfläche 14 an der Wand des Zylinders 31 an und dichtet zwischen einem hohen Druck p₁, z.B. einer Kompressionskammer, und einem niedrigen Druck p₂, z.B. der Druck zwischen zwei benachbarten Kolbenringen, ab. Radial innen ist die Kolbenringanordnung 1 radial beabstandet vom Grund der Ausnehmung, hier der Nut 32, womit radial innen der hohe Druck p₁ anliegt und die Kolbenringsegmente 2 nach außen gedrückt werden. Für die Funktion der Kolbenringanordnung 1 ist es unerheblich, ob die Abstufung 4 hoch- oder niederdruckseitig angeordnet ist. Für den Druckausgleich ist die axiale Stirnfläche 13 der Kolbenringsegmente 2 dem hohen Druck p₁ zugewandt, der über die Ausnehmungen 20, 21 zur Dichtfläche zwischen Kolbenring und Laufbuchse des Zylinders 31 geführt wird. Dadurch wird die Flächenpressung zwischen Kolbenring und Zylinder 31 und damit auch der Verschleiß des Kolbenringes reduziert, wie aus der angedeuteten Druckverteilung ersichtlich ist.

In Fig.5 erkennt man aber ein weiteres Problem eines Kolbenringes, insbesondere bei Hochdruckanwendungen. Durch den hohen Druck p₁ können nämlich die Kolbenringsegmente 2, insbesondere bei weicheren Materialien, z.B. auf PTFE-Basis, und/oder bei hohen Temperaturen, in den Ringspalt 33 zwischen Zylinder 31 und Kolben 30 extrudieren, was die Dichtwirkung des Kolbenringes zerstören zumindest aber erheblich reduzieren würde. Aus diesem Grund kann im Fall eines einfach wirkenden Kolbenringes auf der Seite des niedrigen Drucks p₂ ein Stützring vorgesehen sein, wie in Fig.6 dargestellt.

In Fig.6 ist eine nicht druckausgeglichene erfindungsgemäße Kolbenringanordnung 1 dargestellt, bei der niederdruckseitig ein Stützring 34 angeordnet ist. Der Stützring 34 ist dabei zwischen Kolbenring und Wand der Nut 32 angeordnet, wobei der Stützring 34 radial beabstandet von der Laufbuchse des Zylinders 31 ist. Der Stützring 34 kann z.B. aus Metall gefertigt sein.

Der Stützring 34 kann dabei ein durchgehender Ring sein, z.B. für gebaute Kolben 30, oder ein ein- oder mehrfach geschnittener Ring sein. Bei geschnittenen Stützringen 34 kann darauf geachtet werden, dass durch die Schnittführung kein radialer Spalt entsteht, der zu einer Leckage und damit zu einer Verschlechterung der Dichtwirkung führen würde. Am Stützring 34 wirkt radial innen der hohe Druck p₁, der versucht den Stützring 34 aufzuweiten. Der Stützring 34 darf aber nicht an der Laufbuchse des Zylinders 31 anliegen, da dies zu einer Beschädigung der Laufbuchse führen kann. Ein geschnittener Stützring 34 sollte daher nicht nur gasdicht sein, sondern sollte zusätzlich eine ausreichende Umfangszugsteifigkeit aufweisen.

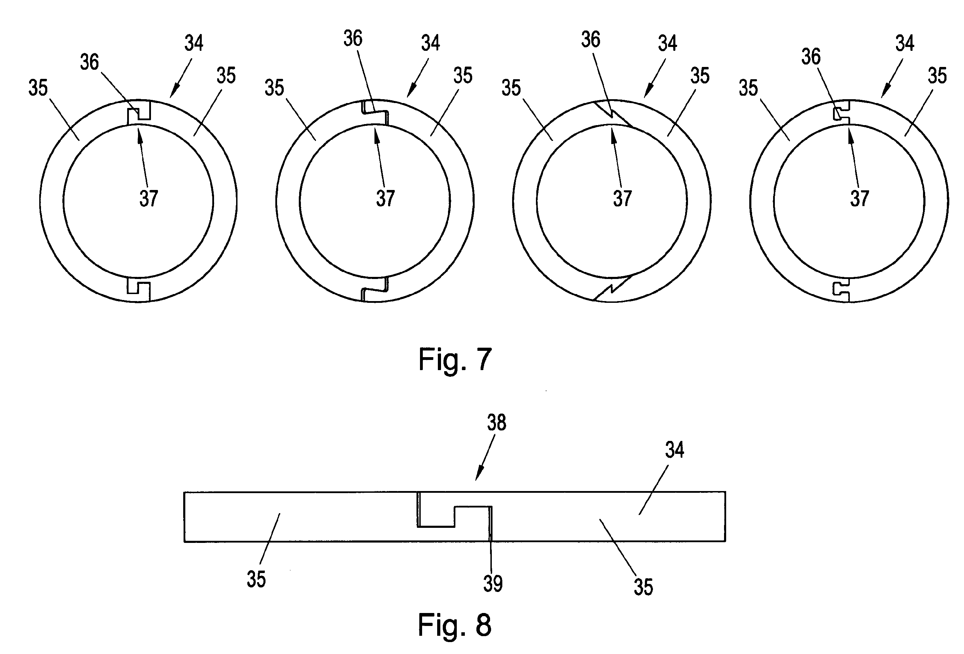

In Fig.7 sind mögliche Ausgestaltungen geschnittener Stützringe 34 dargestellt. Die Stützringe 34 sind in den gezeigten Ausführungen jeweils zweifach geschnittenen, was die Stützringe auch für nicht-gebaute Kolben 30 verwendbar macht. Die Enden der Stützringsegmente 35 in Umfangsrichtung sind jeweils mit einer radialen oder gegenüber einer Tangentialen geneigten Anschlagfläche 36 ausgeführt, die mit einer gegengleichen Anschlagfläche 26 des benachbarten Stützringsegments 35 zusammenwirken. Zusätzlich sind die Enden der Stützringsegmente 35 in Umfangsrichtung in radialer Richtung abgestuft, wobei die Enden mit einer gegengleichen radialen Stufe des benachbarten Stützringsegments 35 zusammenwirken. Auf diese Weise sind die Stützringsegmente 35 mit einem Schloss 37 versehen, das in radialer Richtung abdichtet und gleichzeitig ein Auseinandergehen der Stützringsegmente 35 in Umfangsrichtung verhindert.

Wenn eine gewisse Leckage akzeptabel ist, kann auch ein axiales Schloss 38 vorgesehen werden, wie in Fig.8 gezeigt. Ein solcher Stützring 34 hat zwar die erforderliche Umfangszugsteifigkeit aber auch radiale Leckagespalte 39.

Bei doppeltwirkenden Kolbenringen kann ein solcher Stützring 34 an beiden Seiten des Kolbenringes angeordnet werden oder es werden im Kolben 30 zwei gegengleich angeordnete, axial beabstandete Kolbenringe mit Stützring 34 vorgesehen, wobei die Stützringe 34 aneinander zugewandt angeordnet sind.

Es sei hier erwähnt, dass ein solcher Stützring 34 grundsätzlich bei jedem, nicht nur bei einem erfindungsgemäßen, Kolbenring verwendet werden kann, um die Extrusion des Kolbenringes in den radialen Ringspalt 33 zu verhindern.

## Patentansprüche

1. Gasdichte Kolbenringanordnung mit einem Kolbenring aus einer Mehrzahl von Kolbenringsegmenten (2), deren Enden (5, 6) in Umfangsrichtung axial abgestuft ausgeführt sind und die abgestuften Enden (5, 6) benachbarter Kolbenringsegmente (2) zur Ausbildung einer axialen Abdichtung axial aneinander liegend angeordnet sind, wobei in der Kolbenringanordnung (1) weiters ein einfach geschnittener Dichtring (3) vorgesehen ist, der radial innen an der Umfangsfläche (9) der Kolbenringsegmente (2) anliegt und am Dichtring (3) eine axiale Ausnehmung (10, 12) vorgesehen ist **dadurch gekennzeichnet, dass** an zumindest einem Kolbenringsegment (2) an der radial inneren Umfangsfläche (9) über einen Teil der Breite des Kolbenringsegmentes (2) eine radiale Abstufung (4) vorgesehen ist und dass die axiale Ausmehmung (10,12) mit der radialen Abstufung (4) des Kolbenringsegments (2) zusammenwirkt.

2. Gasdichte Kolbenringanordnung nach Anspruch 1, **dadurch gekennzeichnet, dass** an jedem Kolbenringsegment (2) eine radiale Abstufung (4) vorgesehen ist und am Dichtring (3) eine entsprechende Anzahl zugehöriger axialer Ausnehmungen (10, 12) vorgesehen sind.

3. Gasdichte Kolbenringanordnung nach Anspruch 1 oder 2, **dadurch gekennzeichnet, dass** sich die radiale Abstufung (4) aus der inneren Umfangsfläche (9) erhebt und in die Ausnehmung (10, 12) am Dichtring (3) eingreift.

4. Gasdichte Kolbenringanordnung nach Anspruch 1 oder 2, **dadurch gekennzeichnet, dass** die radiale Abstufung (4) als radiale Ausnehmung in der Umfangsfläche (9) ausgeführt ist und am Dichtring (3) an einem Ende der axialen Ausnehmung (10, 12) ein radialer Vorsprung (15) vorgesehen ist, der in die radiale Ausnehmung eingreift.

5. Gasdichte Kolbenringanordnung nach einem der Ansprüche 1 bis 4, **dadurch gekennzeichnet, dass** in einem Kolbenringsegment (2) eine Mehrzahl von Ausnehmungen (20, 21) vorgesehen sind, die eine Stirnseite (13) des Kolbenringsegments (2) mit der äußeren Umfangsfläche (14) des Kolbenringsegments (2) verbinden.

6. Gasdichte Kolbenringanordnung nach Anspruch 5, **dadurch gekennzeichnet, dass** in der Stirnseite (13) des Kolbenringsegments (2) eine radiale Nut (7) vorgesehen ist, wobei die Nut (7) im Bereich des Stoßes (11) des Dichtringes (3) angeordnet ist.

7. Gasdichte Kolbenringanordnung nach einem der Ansprüche 1 bis 6, **dadurch gekennzeichnet, dass** ein Stützring (34) vorgesehen ist, der an einer Stirnseite der Kolbenringsegmente (2) anliegt.

8. Gasdichte Kolbenringanordnung nach Anspruch 7, **dadurch gekennzeichnet, dass** der Stützring (34) ein durchgehender Ring ist.

9. Gasdichte Kolbenringanordnung nach Anspruch 7, **dadurch gekennzeichnet, dass** der Stützring (34) ein ein- oder mehrfach geschnittener Ring ist und die Stützringsegmente (35) durch ein Schloss (37) in Umfangsrichtung zusammengehalten werden.

10. Gasdichte Kolbenringanordnung nach Anspruch 9, **dadurch gekennzeichnet, dass** die Stützringsegmente (35) durch das Schloss (37) in radialer Richtung abgedichtet werden.

11. Kolben mit einer Ausnehmung (32), in der eine gasdichte Kolbenringanordnung (1) nach einem der Ansprüche 1 bis 10 angeordnet ist.

12. Kolben nach Anspruch 11, **dadurch gekennzeichnet, dass** in einem Kolbenringsegment (2) eine Mehrzahl von Ausnehmungen (20, 21) vorgesehen sind, die die dem hohen Druck (p₁) zugewandte Stirnseite des Kolbenringsegments (2) mit der äußeren Umfangsfläche (14) des Kolbenringsegments (2) verbinden.

13. Kolben nach Anspruch 11 oder 12, **dadurch gekennzeichnet, dass** ein Stützring (34) vorgesehen ist, der an der dem niedrigen Druck (p₂) zugewandten Stirnseite der Kolbenringsegmente (2) anliegt.

14. Kompressor mit einem Zylinder (31) und einem Kolben (30), der im Zylinder (31) hin- und herbeweglich angeordnet ist und im Kolben (30) in einer Ausnehmung (32) eine Kolbenringanordnung (1) nach einem der Ansprüche 1 bis 10 angeordnet ist.

## Claims

1. A gas-proof piston ring assembly with a piston ring consisting of a plurality of piston ring segments (2), the ends (5, 6) of which are configured such that they are axially stepped in circumferential direction and the stepped ends (5, 6) of adjacent piston ring segments (2) are arranged axially abutting against one another for forming an axial sealing, wherein in the piston ring assembly (1), further, a single-cut sealing ring (3) is provided which rests radially inwards against the circumferential surface (9) of the piston ring segments (2), and an axial recess (10, 12) is provided on the sealing ring (3), **characterized in that** on at least one piston ring segment (2) on the radially inner circumferential surface (9), a radial step (4) is provided over a portion of the width of the piston ring segment (2) and that the axial recess (10, 12) interacts with the radial step (4) of the piston ring segment (2).

2. The gas-proof piston ring assembly according to claim 1, **characterized in that** on each piston ring segment (2), a radial step (4) is provided and on the sealing ring (3), a corresponding number of associated axial recesses (10, 12) is provided.

3. The gas-proof piston ring assembly according to claim 1 or claim 2, **characterized in that** the radial step (4) projects from the inner circumferential surface (9) and engages with the recess (10, 12) on the sealing ring (3).

4. The gas-proof piston ring assembly according to claim 1 or claim 2, **characterized in that** the radial step (4) is configured as radial recess in the circumferential surface (9) and on the sealing ring (3) at an end of the axial recess (10, 12), a radial projection (15) is provided which engages with the radial recess.

5. The gas-proof piston ring assembly according to any one of the claims 1 to 4, **characterized in that** in a piston ring segment (2), a plurality of recesses (20, 21) is provided which connects a front end (13) of the piston ring segment (2) with the outer circumferential surface (14) of the piston ring segment (2).

6. The gas-proof piston ring assembly according to claim 5, **characterized in that** in the front end (13) of the piston ring segment (2), a radial groove (7) is provided, wherein the groove (7) is arranged in the area of the joint (11) of the sealing ring (3).

7. The gas-proof piston ring assembly according to any one of the claims 1 to 6, **characterized in that** a support ring (34) is provided which rests against a front side of the piston ring segments (2).

8. The gas-proof piston ring assembly according to claim 7, **characterized in that** the support ring (34) is a continuous ring.

9. The gas-proof piston ring assembly according to claim 7, **characterized in that** the support ring (34) is a single-cut or multiple-cut ring and the support ring segments (35) are held together by a lock (37).

10. The gas-proof piston ring assembly according to claim 9, **characterized in that** the support segments (35) are sealed in radial direction through the lock (37).

11. A piston with a recess (32) in which a gas-proof piston ring assembly (1) according to any one of the claims 1 to 10 is arranged.

12. The piston according to claim 11, **characterized in that** in a piston ring segment (2), a plurality of recesses (20, 21) is provided which connects the piston ring segment's (2) front side facing the high pressure (p₁) with the outer circumferential surface (14) of the piston ring segment (2).

13. The piston according to claim 11 or 12, **characterized in that** a support ring (34) is provided which rests against the piston ring segment's (2) front side facing the low pressure (p₂).

14. A compressor with a cylinder (31) and a piston (30) which is arranged in the cylinder (31) in a movable and reciprocating manner, and piston ring assembly (1) according to any one of the claims 1 to 10 is arranged in a recess (32) in the piston (30).

## Revendications

1. Agencement de segments de piston étanche aux gaz, avec un segment de piston composé d'une pluralité de segments de piston élémentaires (2) dont les extrémités (5, 6) dans la direction de la circonférence sont étagées dans la direction axiale, les extrémités étagées (5, 6) de segments de piston élémentaires (2) adjacents étant juxtaposées axialement pour assurer une étanchéité axiale, l'agencement de segments de piston (1) comprenant en outre un segment d'étanchéité (3) coupé une fois qui repose sur la surface périphérique (9) des segments de piston élémentaires (2) située à l'intérieur dans la direction radiale et le segment d'étanchéité (3) comportant un décrochement axial (10, 12), **caractérisé en ce qu'**au moins l'un des segments de piston élémentaires (2) possède, sur une partie de la largeur du segment de piston élémentaire (2), un étagement radial (4) sur la surface périphérique (9) intérieure dans la direction radiale et **en ce que** le décrochement axial (10, 12) coopère avec l'étagement radial (4) du segment de piston élémentaire (2).

2. Agencement de segments de piston étanche aux gaz selon la revendication 1, **caractérisé en ce que** chacun des segments de piston élémentaires (2) possède un étagement radial (4) et **en ce qu'**il est prévu sur le segment d'étanchéité (3) un nombre correspondant de décrochements axiaux (10, 12) associés.

3. Agencement de segments de piston étanche aux gaz selon l'une des revendications 1 ou 2, **caractérisé en ce que** l'étagement radial (4) part de la surface périphérique (9) intérieure et s'engage dans le décrochement (10, 12) du segment d'étanchéité (3).

4. Agencement de segments de piston étanche aux gaz selon l'une des revendications 1 ou 2, **caractérisé en ce que** l'étagement radial (4) prend la forme d'un décrochement radial dans la surface périphérique (9) et **en ce qu'**il est prévu sur le segment d'étanchéité (3), à une extrémité du décrochement axial (10, 12), une saillie radiale (15) qui s'engage dans le décrochement radial.

5. Agencement de segments de piston étanche aux gaz selon l'une des revendications 1 à 4, **caractérisé en ce qu'**il est prévu sur un segment de piston élémentaire (2) une pluralité de décrochements (20, 21) qui relient une face frontale (13) du segment de piston élémentaire (2) avec la surface périphérique extérieure (14) du segment de piston élémentaire (2).

6. Agencement de segments de piston étanche aux gaz selon la revendication 5, **caractérisé en ce qu'**il est prévu dans la face frontale (13) du segment de piston élémentaire (2) une rainure radiale (7), la rainure (7) étant disposée dans la région de la fente (11) du segment d'étanchéité (3).

7. Agencement de segments de piston étanche aux gaz selon l'une des revendications 1 à 6, **caractérisé en ce qu'**il est prévu un segment d'appui (34) qui repose sur une face frontale des segments de piston élémentaires (2).

8. Agencement de segments de piston étanche aux gaz selon la revendication 7, **caractérisé en ce que** le segment d'appui (34) est un segment continu.

9. Agencement de segments de piston étanche aux gaz selon la revendication 7, **caractérisé en ce que** le segment d'appui (34) est un segment coupé une ou plusieurs fois et **en ce que** les segments de piston élémentaires (35) sont maintenus ensemble par un fermoir (37) dans la direction de la circonférence.

10. Agencement de segments de piston étanche aux gaz selon la revendication 9, **caractérisé en ce que** les segments de piston élémentaires (35) sont rendus étanches dans la direction radiale par le fermoir (37).

11. Piston avec une gorge (32) dans laquelle est disposé un agencement de segments de piston étanche aux gaz (1) tel que défini à l'une des revendications 1 à 10.

12. Piston selon la revendication 11, **caractérisé en ce qu'**il est prévu dans un segment de piston élémentaire (2) une pluralité de décrochements (20, 21) qui relient la face frontale du segment de piston élémentaire (2) exposée à la haute pression (p₁) et la surface périphérique extérieure (14) du segment de piston élémentaire (2).

13. Piston selon l'une des revendications 11 ou 12, **caractérisé en ce qu'**il est prévu un segment d'appui (34) qui repose sur la face frontale des segments de piston élémentaires (2) tournée vers la basse pression (p₂).

14. Compresseur, avec un cylindre (31) et un piston (30) qui est monté dans le cylindre (31) en pouvant effectuer des mouvements d'aller et de retour et avec, dans une gorge (32) du piston (30) un agencement de segments de piston (1) tel que défini à l'une des revendications 1 à 10.
